(19) Europäisches Patentamt

European Patent Office

Office européen des brevets

(11) **EP 4 737 085 A1**

(12) **EUROPEAN PATENT APPLICATION**
published in accordance with Art. 153(4) EPC

(43) Date of publication:
06.05.2026 Bulletin 2026/19

(51) International Patent Classification (IPC):
*B29B 9/06* (2006.01)    *B29B 7/46* (2006.01)
*B29B 7/84* (2006.01)    *B29K 69/00* (2006.01)

(21) Application number: 24831656.4

(22) Date of filing: 11.06.2024

(52) Cooperative Patent Classification (CPC):
**B29B 7/46; B29B 7/84; B29B 9/06;** B29K 2069/00

(86) International application number:
**PCT/JP2024/021180**

(87) International publication number:
**WO 2025/004789 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 28.06.2023 JP 2023105976

(71) Applicant: Mitsubishi Engineering-Plastics Corporation
Tokyo 105-0021 (JP)

(72) Inventors:
• TAJIRI, Toshiyuki
Hiratsuka-shi, Kanagawa 254-0016 (JP)
• TOYOTA, Akinori
Hiratsuka-shi, Kanagawa 254-0016 (JP)
• MURAMATSU, Yuka
Hiratsuka-shi, Kanagawa 254-0016 (JP)

(74) Representative: Müller-Boré & Partner
Patentanwälte PartG mbB
Friedenheimer Brücke 21
80639 München (DE)

(54) **METHOD FOR PRODUCING POLYCARBONATE RESIN COMPOSITION PELLET**

(57)    A method for producing polycarbonate resin composition pellets with excellent transparency more stably while achieving high productivity, using an ultra-high torque twin screw extruder. The method uses a polycarbonate resin granular material having specific molecular weight and particle diameter as a raw material, and comprises kneading the polycarbonate resin granular material at condition of a screw shaft torque density of 9.0 to 17.0 Nm/cm$^3$; a screw rotation speed of 400 to 800 rpm; [output (kg/h) ÷ screw rotation speed (rpm) ÷ cube of center-to-center distance between two screw shafts (cm$^3$)] of 0.015 to 0.026 kg/h/rpm/cm$^3$, and an unmelted rate in a flange before a die holder of 2 to 30%; and extruding a strand from a die, and pelletizing the strand.

[FIG.1]

EP 4 737 085 A1

**Description**

[Technical Field]

The present invention relates to a production method for polycarbonate resin composition pellets and, more specifically, to a highly productive and more stable method for producing polycarbonate resin composition pellets with excellent transparency using an ultra-high torque twin screw extruder.

[Background Art]

Polycarbonate resins are widely used in a variety of fields because they have excellent impact resistance, heat resistance, electrical insulation properties, dimensional stability, and the like, and because these properties are well balanced. In particular, polycarbonate resin produced from bisphenol compounds has the advantages of being excellent in transparency, impact resistance and heat resistance, being lightweight, and being difficult to break, and is therefore used as a substitute for glass in automobile parts, building materials, and optical parts such as lenses. Further, in recent years, this has been widely used as molded products such as panel components for display devices used in various mobile terminals such as smartphone, tablet computer, car navigation or car audio equipment, portable game console, digital camera, etc.

For the production of such molded products, polycarbonate resin composition pellets (the term "pellet" refers to a product obtained by forming a once-molten material into a cylindrical, spherical or oval spherical shape) are used that are made of a polycarbonate resin raw material with various additives and the like added as needed.

The polycarbonate resin composition pellets are usually produced using a twin screw extruder, which has long been required to provide improved plasticizing and kneading capabilities for productivity enhancement. Recently, ultra-high torque extruders (such as "TEX$\alpha$III" manufactured by The Japan Steel Works, Ltd. and "TEM-SX" manufactured by Shibaura Machine Co., Ltd.) with a maximum torque density as high as 18 Nm/cm$^3$ have been developed, allowing for production in an unprecedentedly high torque region. Further, achieving higher torque has enabled increased screw rotation speed more than before. Thus, these extruders can operate in a high energy region (where both a higher torque density and a higher screw rotation speed are achieved), which has made it possible to achieve previously unimaginably high output.

Regarding the torque density of extruder, PTL 1 describes an invention that uses a single reverse screw element having a flight portion with an arc-shaped notch, with the aim of increasing the productivity of glass fiber reinforced thermoplastic resin composition pellets compared to conventional methods and extremely reducing the probability that aggregates of monofilaments (un-defibrated glass fiber bundles) will remain in the produced pellets. The PTL 1 also specifies the conditions for this as follows: (i) a torque density, which is the value obtained by dividing the torque of the screw in the reverse transporting screw element by the cube of the center-to-center distance between the engaging screws, of 11 Nm/cm$^3$ or more; and (ii) Q/Ns density, where Q is output and Ns is screw rotation speed, which is obtained by dividing Q/Ns by the cube of the center-to-center distance between the screws, is 0.013 kg/h/rpm/cm$^3$

However, with regard to torque density, PDL 1 simply states in paragraph [0063] that "When the torque density is 11 (Nm/cm$^3$) or more, the filling rate of the material in the extruder increases, the energy density decreases, and there are effects that even if the rotation speed is increased compared to conventional cases, the temperature rise is low. Furthermore, a preferable torque density range is 13 Nm/cm$^3$ or more and 18 Nm/cm$^3$ or less." However, there is no mention what the torque density was in the examples. In the examples of PDL 1, a twin-screw extruder "TEX44$\alpha$II (manufactured by Japan Steel Works, Ltd.) with a screw element cylinder diameter D of 0.047 m" is used, but the allowable shaft torque density of the TEX44$\alpha$II is 13.1 Nm/cm$^3$, and since a torque density higher than this would damage the screw shaft or gearbox and cause the shaft to break, it is usually operated at a torque density of 80% or less. Therefore, the torque density of it can be said to be 10.5 Nm/cm$^3$ at the highest.

Since the ultra-high torque twin screw extruders as described above did not yet exist when PTL 1 was filed, the specific conditions disclosed in PTL 1 are those for conventional low torque extruders. There is no description or suggestion of the various problems that arise during ultra-high torque operation, which is the subject of the present invention, much less any solution to those problems.

The torque density along the screw is highest at the base of the extruder, and this torque is used for melt-kneading, transporting, etc. of the resin, and it decreases toward the tip of the screw, reaching 0 at the tip. PTL 1 describes the torque density in the reverse feed screw element in the glass fiber mixing zone, PTL 1 mentions the torque density at the reverse transporting screw element in a glass fiber kneading zone, but even in this zone the screw shaft torque density is quite small, thought to be 3 Nm/cm$^3$ or less.

[Citation List]

# EP 4 737 085 A1

[Patent Literature]

[PTL 1] JP 2012-213997 A

[Summary of Invention]

[Technical Problem]

In twin screw extrusion, resin is usually melted completely in a kneading zone, subjected to removal of volatile components in a vacuum vent zone, and extruded into a strand from a die. However, compounding in the high energy range raises the resin temperature too much, which causes the color tone to deteriorate. The object (problem) of the present invention has been made in view of the above-mentioned problems, and is to provide a method for producing polycarbonate resin pellets in a high energy region using an ultra-high torque twin-screw extruder, which lowers the resin temperature and prevents deterioration of color tone YI.

[Solution to Problem]

As a result of intensively examining ways for reducing the resin temperature to achieve the above-described object, the present inventors have found that a significant reduction in resin temperature followed by suppression of increase in color tone (YI) can be achieved by: using as a raw material a polycarbonate resin granular material that has a viscosity-average molecular weight of 11000 to 27000 and a median diameter $D_{50}$ of 400 to 1500 $\mu$m as measured by light-scattering wet method; and kneading the raw material under the following conditions: a screw shaft torque density is in a range of from 9.0 to 17.0 Nm/cm$^3$; a screw rotation speed is in a range of from 400 to 800 rpm; and a value of [output (kg/h) $\div$ screw rotation speed (rpm) $\div$ cube of center-to-center distance between two screw shafts (cm$^3$)] is 0.015 to 0.026 kg/h/rpm/cm$^3$, and setting the unmelted ratio in the range of 2 to 30%, that is, by intentionally leaving 2 to 30% of the unmelted portion after kneading. The effect of this can be explained as follows.

A polycarbonate resin granular material having a median diameter $D_{50}$ of 400 to 1500 $\mu$m has a glass transition temperature of around 140°C. Further, polycarbonate resin produced by the interface method is said to have a partially crystalline structure with a melting point of around 200°C, requiring a melting heat of approximately 30 J/g during melting. In other words, in the semi-molten state, its temperature is much lower than the surrounding molten polycarbonate, and it absorbs a lot of heat from the surroundings as it melts, just like ice in hot water rapidly lowering the temperature of the hot water. Polycarbonate resin having a smaller amount of unmelted part is unable to reduce the temperature of its surrounding molten part. Meanwhile, polycarbonate resin having an excessively large amount of unmelted part causes accumulation of the unmelted polycarbonate on a die and a mesh, which inhibits resin flow and causes vent-up. In view of this, if the unmelted rate is 2 to 30%, the unmelted portion will melt due to shearing at the breaker plate ahead of the flange, retention at the die holder, and strong contraction and shearing at the die hole ahead. Alternatively, even if the unmelted part is slightly left behind, it does not cause strand breakage.

The present invention relates to a production method for polycarbonate resin composition pellets as described below.

1. A method for producing polycarbonate resin composition pellets from a polycarbonate resin granular material with a twin screw extruder, wherein the polycarbonate resin granular material has a viscosity-average molecular weight of 11000 to 27000 and a median diameter $D_{50}$ of 400 to 1500 $\mu$m as measured by a light-scattering wet method, and the method comprises:

kneading the polycarbonate resin granular material under the following conditions: a screw shaft torque density at a base of each screw is in a range of from 9.0 to 17.0 Nm/cm$^3$; a screw rotation speed is in a range of from 400 to 800 rpm; and a value of [output (kg/h) $\div$ screw rotation speed (rpm) $\div$ cube of center-to-center distance between two screw shafts (cm$^3$)] is 0.015 to 0.026 kg/h/rpm/cm$^3$, so that an unmelted rate in a flange before a die holder is in a range of 2 to 30%; and
extruding a strand from a die, and pelletizing the strand.

2. The production method of 1 above, wherein devolatilization is carried out under vacuum using a vent with an opening provided downstream of a kneading zone, the opening having a length of 2.0 to 6.0 D (D is a cylinder diameter) in a screw shaft direction and being provided such that a distance from a most downstream position of the vent opening to a tip of screw is 5.0 to 10.0 D.

3. The production method of 1 or 2 above, wherein the strand just extruded from the die has a temperature in a range of from 260°C to 330°C.

4. The production method of any one of 1 to 3 above, wherein the resultant polycarbonate resin composition pellets have a total light transmittance of 50% or more as measured using transmitted light in accordance with JIS K7361.

[Advantageous Effects of Invention]

The production method of the present invention makes it possible to stably produce polycarbonate resin composition pellets while achieving high productivity (high output) in a high energy region where a high torque density and a high screw rotation speed are achieved, using a twin screw extruder. According to this production method, it is possible to reduce resin temperature, so that color tone (YI) can be prevented from deteriorating, resulting in a polycarbonate resin material with excellent transparency.

[Brief Description of Drawings]

[Fig. 1]

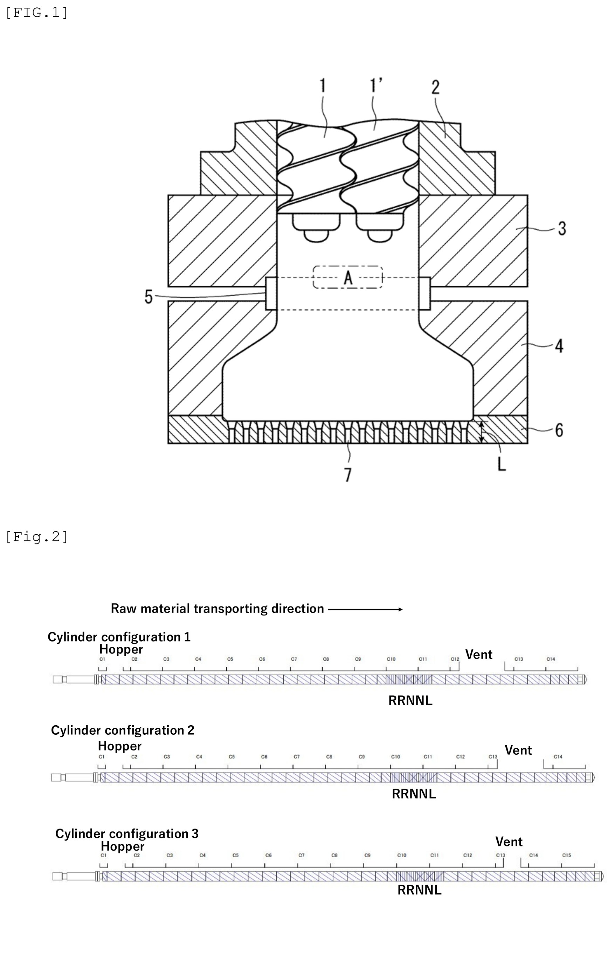

Fig. 1 is a cross-sectional view showing an example of a die portion and its surroundings in a twin screw extruder.
[Fig. 2]
Fig. 2 is a transverse sectional view showing screw configurations of a twin screw extruder used in Examples.
[Fig. 3]

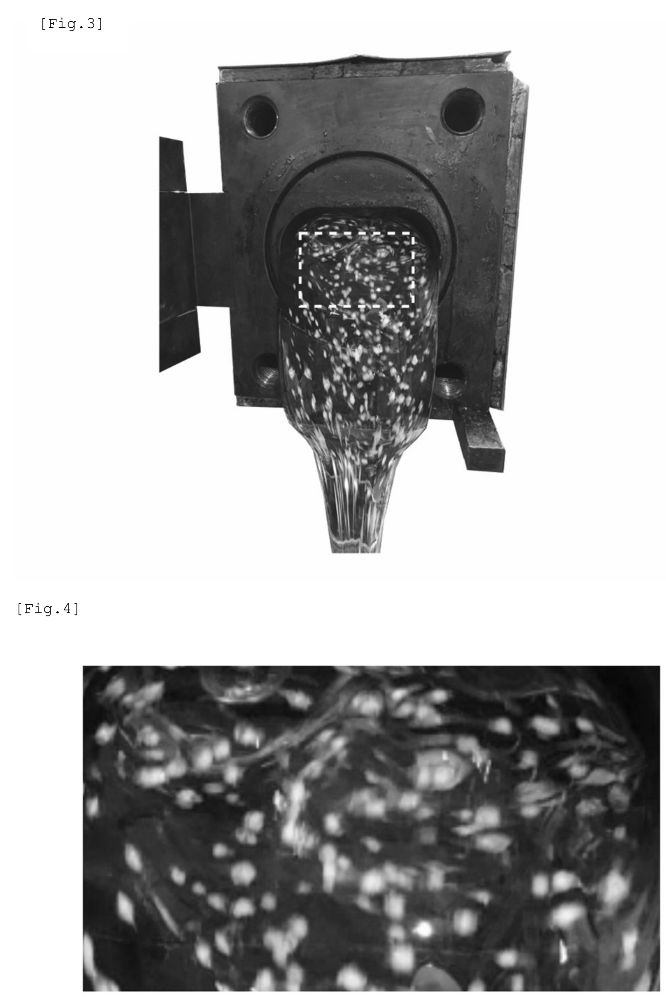

Fig. 3 is a photograph of molten resin taken when a die holder is opened for the measurement of the unmelted ratio in the Examples.
[Fig. 4]
Fig. 4 is an image for use in the measurement of unmelted rate in the molten resin in Fig. 3.
[Fig. 5]

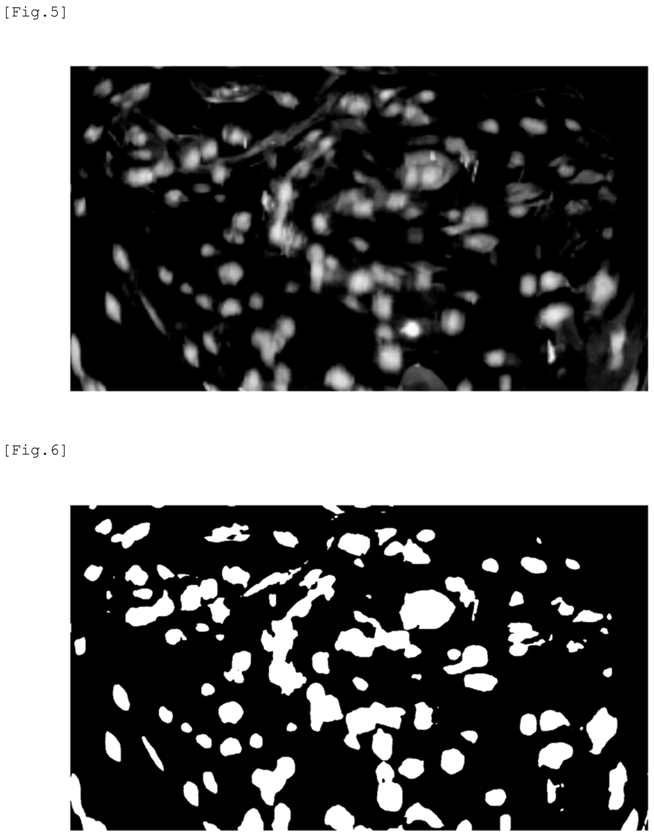

Fig. 5 is an extracted image of a high-brightness part of the image in Fig. 4.
[Fig. 6]
Fig. 6 is a binary image obtained from the image in Fig. 5 for the measurement of the area fraction of the unmelted part.

[Description of Embodiments]

Hereinafter, the present invention will be described in detail by way of embodiments and examples, but the present invention is not limited to the embodiments, the examples, and the like.
A raw material for use in a production method for polycarbonate resin composition pellets according to the present invention is a polycarbonate resin granular material having a viscosity-average molecular weight (Mv) of 11000 to 27000 and a median diameter $D_{50}$ of 400 to 1500 $\mu$m as measured by light-scattering wet method.
The polycarbonate resin granular material is in granular form, including, for example, flakes, granules, powders and the like.
If the viscosity-average molecular weight (Mv) is less than 11000, the resultant polycarbonate resin composition will be low in intensity. Meanwhile, a viscosity-average molecular weight (Mv) of more than 27000 will increase resin temperature, resulting in poor color tone. The viscosity-average molecular weight (Mv) is preferably 12000 or more, more preferably 13000 or more, and preferably 26000 or less, more preferably 25000 or less, and still more preferably 24000 or less.
If the median diameter $D_{50}$ of the polycarbonate resin granular material is less than 400 $\mu$m, the resin temperature will be excessively high, resulting in poor color tone. Meanwhile, a median diameter $D_{50}$ of more than 1500 $\mu$m will cause an increased amount of resin to remain unmelted, making vent-up likely to occur. The median diameter $D_{50}$ is preferably 450 $\mu$m or more, more preferably 500 $\mu$m or more, and preferably 1400 $\mu$m or less, more preferably 1300 $\mu$m or less, and still more preferably 1200 $\mu$m or less.
The $D_{50}$ value, which is a particle size of the polycarbonate resin granular material, is measured using a laser diffraction particle size distribution measurement device, as a specific example, "Mastersizer 3000" manufactured by Malvern Panalytical Ltd. The particle size measurement is based on light-scattering wet method and uses purified water as a dispersion medium and a surfactant as a dispersing agent. The measurement range is 0.01 to 3500 $\mu$m.
Alternatively, the median diameter $D_{50}$ of the polycarbonate resin granular material can also be obtained from the particle size distribution measured by the method (dry sieving test method) specified by JIS K0069. The particle diameter obtained by this method is in a range of 400 to 1500 $\mu$m, preferably 450 to 1400 $\mu$m, and more preferably 500 to 1300 $\mu$m.
The polycarbonate resin granular material satisfying the above-described median diameter $D_{50}$ and viscosity-average molecular weight can be appropriately selected from among commercialized products.
The polycarbonate resin granular material satisfying the above-described viscosity-average molecular weight and particle diameter may account for 100 mass% of the polycarbonate resin raw material, or at least 50 mass% of the polycarbonate resin raw material. For example, as shown in Examples, it is also preferred that the raw material is a combination of the polycarbonate resin granular material and common polycarbonate resin pellets having a larger particle diameter than the polycarbonate resin granular material. The polycarbonate resin granular material preferably accounts for more than 50 mass%, more preferably more than 60 mass%, still more preferably more than 70 mass%, more than 80 mass% or more than 85 mass%, further preferably more than 90 mass%, and particularly preferably more than 95 mass%.

Polycarbonate resin

Examples of the polycarbonate resin can include aromatic polycarbonate resins, aliphatic polycarbonate resins, and aromatic-aliphatic polycarbonate resins. The polycarbonate resin is preferably an aromatic polycarbonate resin, and more specifically an aromatic polycarbonate polymer or copolymer obtained by reacting an aromatic dihydroxy compound with phosgene or diester carbonate.

Examples of the aromatic dihydroxy compound include 2,2-bis(4-hydroxyphenyl)propane (i.e., bisphenol A), 2,2-bis(3-methyl-4-hydroxyphenyl)propane (i.e., bisphenol C), tetramethylbisphenol A, $\alpha,\alpha'$-bis(4-hydroxyphenyl)-p-diisopropylbenzene, hydroquinone, resorcinol, and 4,4'-dihydroxydiphenyl.

Preferred examples of the polycarbonate resin include those obtained using, as the dihydroxy compound, bisphenol A, a combination of bisphenol A and another aromatic dihydroxy compound, bisphenol C, or a combination of bisphenol C and another aromatic dihydroxy compound (especially, bisphenol A).

The polycarbonate resin may be a homopolymer composed of a single repeating unit or a copolymer composed of two or more different repeating units. The copolymer may be any type of copolymer, such as a random copolymer or a block copolymer.

The viscosity-average molecular weight (Mv) of the polycarbonate resin is calculated using the following Schnell's viscosity equation:

$$[\eta] = 1.23 \times 10^{-4} Mv^{0.83},$$

where $[\eta]$ is the intrinsic viscosity of a methylene chloride solution of the polycarbonate resin that is obtained based on viscosity measurement at 25°C using an Ubbelohde viscometer.

The production method for the polycarbonate resin is not particularly limited and can be either the phosgene method (interfacial polymerization method) or the melting method (transesterification method). The polycarbonate resin obtained by the interfacial polymerization method is suitable for use in the present invention, because it easily achieves low color tone (YI) and further, since it is in the form of flakes when produced by polymerization, it is suitable for the present invention. The color tone (YI) is preferably less than 2.0 as measured by the method described later.

The polycarbonate resin may be produced not only from virgin raw materials but also from used products (i.e., so-called material-recycled polycarbonate resin). The polycarbonate resin may preferably contain both virgin raw materials and recycled resin or may be made of recycled polycarbonate resin. The proportion of the recycled polycarbonate resin, if used, in the polycarbonate resin is preferably 40 mass% or more, 50 mass% or more, 60 mass% or more, or 80 mass% or more, and may be even 100 mass%.

A twin screw extruder is used in the production method of the present invention. A variety of twin screw extruders can be used, and the screw rotation type can be co-rotating or counterrotating, but a same direction meshing type twin screw extruder is preferred. In addition, a vent opening which can be decompressed or opened to the atmosphere is provided in the twin screw extruder. The twin screw extruder preferably includes a vent opening that is open to reduced or atmospheric pressure.

In the present invention, an ultra-high torque twin-screw extruder having a maximum torque density of preferably 16 to 20 Nm/cm$^3$ is used, and the extrusion is carried out under conditions where the torque density of one screw shaft at the base of the screw of the twin-screw extruder is 9.0 to 17.0 Nm/cm$^3$.

The screw shaft torque density, which is expressed in Nm/cm$^3$, is defined as the value obtained by dividing the torque Nm required to drive each screw (or applied to the base of each screw) by the cube of the center-to-center distance between screw shafts. Even when extrusion is performed using extruders of different sizes, if the torque density value is the same, the torque applied to the resin per unit volume will be the same. When torque (Nm) generated by a motor for driving the screw is transferred to the screw shaft, the screw starts to transport and melt the polycarbonate resin. The torque as used herein refers to that applied to the base of the screw shaft. The torque decreases as it approaches the tip of the screw, and the torque at the tip of the screw is 0 Nm.

The torque generated by the motor for driving the screw of the extruder is displayed on a control panel of the extruder in percent of allowable screw torque (100%). As for "TEX44$\alpha$III", for example, the 100% torque corresponds to a torque density of 17.9 Nm/cm$^3$. Based on this correspondence, the torque density can be calculated from the displayed torque (%) during operation. In general VVVF inverter control, in the constant torque region, the value obtained by dividing the current value (A) by the rated current corresponds to the torque %. Since "TEX44αIII" has a maximum torque (the sum of the torques applied to the bases of the two screw shafts) of 2077 Nm and a distance between the screw shafts of 3.87 cm, the maximum torque density (at the base) of each of the screws is 17.9 Nm/cm³.

The raw material, such as the polycarbonate resin granular material, is fed from a feeding port at the base of the extruder, and is transported and preheated in the feeding, transporting and preheating zone, the material is fed, transported and preheated.

The screw configuration, from the base of the extruder toward the direction of raw material feed, consists of a full-flight conveying screw in the supply, conveying, and preheating zone, a kneading zone, and a full-flight screw for conveying after melting, and the part of the full-flight screw after the kneading zone is preferably provided with a vacuum vent. The screw configuration from the base of the extruder toward the direction of raw material feed, is as follows: a full flight transporting screw for feeding, transporting and preheating; the kneading zone; and a full flight screw for transporting after the melting. The full flight screw located behind the kneading zone preferably includes a vacuum vent. This vacuum vent removes volatile components from the molten resin, such as moisture, residual solvents, and volatile components of additives.

The configuration of the kneading zone is not particularly limited, but preferably has a length of 2.5 to 8.0 D (D is the cylinder diameter) and includes a combination of two or more of the following elements: R kneading disc, N kneading disc, L kneading disc, L screw, seal ring, mixing screw, and rotor screw. The kneading zone may be provided in two or more locations as long as the total length of the kneading zones is 2.5 to 8.0 D.

The R kneading disc, which is also referred to as a forward transport kneading disc (hereinafter, may be referred to as "R"), usually has two or more blades with a helix angle ☉ of 10 to 75 degrees formed therebetween. The blades staggered at the above angle make it possible to transport the resin and apply a strong shear force to the resin.

The N kneading disc, which is also referred to as an orthogonal kneading disc (hereinafter, may be referred to as "N"), usually has two or more blades with a helix angle ☉ of 75 to 105 degrees formed therebetween. Since the blades staggered at an angle of approximately 90 degrees, there is almost no force to transport the resin, but the kneading force is strong.

The L kneading disc, which is also referred to as a reverse transport kneading disc (hereinafter, may be referred to as "L"), usually has two or more blades with a helix angle ☉ of -10 to -75 degrees formed therebetween. The L kneading disc is an element capable of creating increased pressure that acts in such a direction as to allow the flowing resin to be held back or moved backward. The L kneading disc is provided downstream of the element for promoting kneading, thereby allowing a strong kneading effect to be exerted on the resin held back.

The L screw, which is also referred to as a reverse transport screw, forms a helical structure in the opposite direction of a standard forward transporting screw. This element is capable of creating increased pressure that acts in such a direction as to allow the flowing resin to be held back or moved backward. As with the L kneading disc, the L screw is provided downstream of the element for promoting kneading, thereby allowing a strong kneading effect to be exerted on the resin held back.

Each of the above-described blades usually has an elliptical shape with flat parts formed at the two vertices of the ellipse. The blade is also referred to as a disc, and each of the kneading discs is usually composed of three to seven discs. The disc may have an approximately triangular shape with three vertices; this type of disc may be referred to as a three-lobe kneading disc and can be used equally for the R, N and L. Alternatively, the kneading disc may be a twist kneading disc with a tip twisted in the screw shaft direction; this type of disc can also exert the same kneading effect.

In order to efficiently melt the polycarbonate resin granular material having a median diameter $D_{50}$ of 400 to 1500 μm, the twist kneading disc is suitably used.

The seal ring, which is a ring-shaped element to be fitted with the screw, serves to block approximately 70% to 90% of a flow channel to disrupt the resin flow, thereby increasing resin pressure. As with the L kneading disc, the seal ring is provided downstream of the element for promoting kneading, thereby allowing a strong kneading effect to be exerted on the resin held back.

The mixing screw is made by cutting off the crest of the screw flight, and is a single/double-threaded transporting or reverse transporting screw element to create a strong shear dispersion force. Examples of the mixing screw include a forward transporting cut-flight mixing screw and a reverse transporting cut-flight mixing screw.

The rotor screw forms an elliptical (two-bladed) or triangular rotor blade that is capable of creating a strong shear force due to a gap (tip clearance) between the rotor and the inner wall surface of a barrel.

The kneading zone preferably includes a combination of two or more of the above-described elements, more preferably a combination of the R kneading disc, the N kneading disc, and the L kneading disc. For example, an RRNNNNNL configuration, an RNNNL configuration and the like are preferred in which one or a plurality of Rs are followed by a plurality of Ns and then an L.

According to the method of the present invention, the torque density at the screw shaft is as high as 9.0 to 17.0 Nm/cm³, and the screw rotation speed is as high as 400 to 800 rpm, resulting in higher output extrusion than before. If the screw rotation speed and the torque density are lower than 400 rpm and 9.0 Nm/cm³, respectively, high output cannot be achieved. If the torque density is higher than 17.0 Nm/cm$^3$, even slight torque fluctuations could damage the screw shaft. If the screw rotation speed is higher than 800 rpm, the resin temperature increases rapidly, followed by increased YI and poor total luminous transmittance. In order to achieve high output (high productivity) of polycarbonate resin composition pellets with excellent transparency, the screw rotation speed has to be in a range of from 400 to 800 rpm, and the torque density has to be in a range of from 9.0 to 17.0 Nm/cm$^3$.

Further, the present invention requires the kneading process to be performed under the following conditions: the screw shaft torque density is in a range of from 9.0 to 17.0 Nm/cm$^3$; the screw rotation speed is in a range of from 400 to 800 rpm; and the value of [output (kg/h) ÷ screw rotation speed (rpm) ÷ cube of center-to-center distance between two screw shafts (cm$^3$)] is 0.015 to 0.026 kg/h/rpm/cm$^3$. The specific polycarbonate resin raw material is kneaded under the above-described conditions, so that 2% to 30% of the resultant polycarbonate resin composition remains unmelted. This makes it possible to significantly reduced resin temperature and, accordingly, to suppress an increase in color tone (YI).

Preferably, the value of [output (kg/h) ÷ screw rotation speed (rpm) ÷ cube of center-to-center distance between two screw shafts (cm$^3$)] is 0.016 to 0.025 kg/h/rpm/cm$^3$, more preferably 0.017 to 0.024 kg/h/rpm/cm$^3$.

The screw shaft torque density is 9.0 to 17.0 Nm/cm$^3$, preferably 9.5 Nm/cm$^3$ or higher, more preferably 10.0 Nm/cm$^3$ or higher, still more preferably 10.5 Nm/cm$^3$ or higher, and preferably 16.5 Nm/cm$^3$ or lower, more preferably 16.0 Nm/cm$^3$ or lower.

As shown in Fig. 1, the twin screw extruder includes a cylinder in which two screws 1, 1' are housed, a flange 3 at a tip 2 of the cylinder, and a die holder 4 located behind the flange 3. A die portion includes a braker plate (or a ring plate) 5, which can be equipped with a screen mesh to remove foreign material and the like through filtration. In the absence of a screen mesh, the breaker plate 5 in the form of a ring, or a ring plate, is usually used. The die holder 4 is also referred to as a die plate, and the flange 3 is also referred to as a hinge plate. The die holder 4 is integrated with a die 6 that includes die holes 7.

The proportion (%) of the unmelted portion of the polycarbonate resin composition after kneading can be confirmed as the unmelted rate in an inner part A of the flange 3 located before the die holder 4. More specifically, after the melt-kneading process under the above-described conditions, the die holder 4 of the extruder is opened using a hinge attached to the flange 3 so as to let the molten resin in the inner part A of the flange 3 flow down. Then, a vacuum is drawn through the vent, which makes the molten part look transparent and the unmelted part look turbid. At this time, the resin coming out of the inner part of the flange 3 is allowed to fall free with no force applied thereto. A photograph of the resin in which the unmelted part looks turbid is taken from the front of the tips of the two rotating screws 1, 1' within the field of view in which the screws can be seen entirely. The photograph thus taken is enlarged so that the molten part and the unmelted part fill the frame of the photograph.

Fig. 3 is a photograph of the molten resin taken with the die holder open for the measurement of unmelted ratio in the Examples. The die holder 4 is pulled open toward the front in Fig. 3 using the hinge on the side of the flange 3, and the resin in the region enclosed by white dashed lines flowing down from the die holder 4 is photographed. The image thus taken is shown in Fig. 4.

This image is analyzed to determine the visual area ratio of the unmelted portion from the transparent melted portion and the unmelted opaque portion, and the unmelted ratio (unmelted visual area ratio: unit: %) is measured.

Specifically, the image analysis is made in the following manner.

A general-purpose image analysis measurement system, "WinROOF 2018" manufactured by MITANI Corporation, is used to analyze the black-and-white image as shown in Fig. 4. Binarization is performed (Fig. 6) using the intensity transformation function so that a high brightness part is extracted (Fig. 5) based on a threshold intensity of 67 to 255, followed by selection of the turbid part (unmelted part) based on a threshold of 63 to 225. The resultant binary image is used to measure the area fraction of the unmelted part in the field of view.

Note that the area fraction of the unmelted part in the field of view is not equal to the volume fraction of the unmelted part, i.e., volume of unmelted part/(volume of molten part + volume of unmelted part). Since the molten part is transparent, the unmelted part both on the surface and inside the resin is visible. As such, the area fraction of the unmelted part in the field of view is greater than the volume fraction of the unmelted part. The area fraction of the unmelted part is a larger value than the unmelted volume ratio, but in the present invention, the area fraction of the unmelted part measured by the above-mentioned method is used as the unmelted ratio.

The unmelted ratio is 2% to 30%, preferably 3% or more, more preferably 4% or more, and preferably 25% or less, more preferably 20% or less. When 2% to 30% of the resin remains unmelted, the resin temperature can be significantly reduced, so that an increase in color tone (YI) can be suppressed accordingly. If the unmelted ratio is less than 2%, the resultant polycarbonate resin material will have poor YI and insufficient transparency. If the unmelted ratio is more than 30%, vent-up will be likely to occur rapidly, making production impossible.

In order to stably produce the polycarbonate resin composition pellets with excellent transparency in the high energy region, it is also preferable to optimize the cylinder configuration. The polycarbonate resin absorbs approximately 0.2% of moisture in a high-humidity environment. Further, a solvent used in the production process remains slightly even after a downstream drying process. The residual solvent is usually 0.1% or less. The moisture and the residual solvent vaporize under high-temperature melting conditions in the twin screw extruder, and the volatile components are removed through the vacuum vent. In a case where a larger amount of polycarbonate resin is processed, the volatile components are increased accordingly, and the increased volatile components form upward air movement in the vacuum vent. As a result, vent-up is likely to occur that causes the molten resin to be pushed upward.

In order to suppress the vent-up, a vent cylinder having an opening that is 2.0 to 6.0 D long in the screw shaft direction is provided downstream of the kneading zone for the removal of the volatile components. If the opening is shorter than 2.0 D, devolatilization is insufficient, so that the vent-up is likely to occur from upstream at the vacuum vent. If the opening is longer than 6.0 D, the extruder will be longer in overall length, resulting in longer retention time. As a result, the resin temperature is likely to increase, followed by increased YI. Further, the opening of the vacuum vent preferably has a width (in the direction perpendicular to the screw) of 0.3 to 1.5 D. If the width is less than 0.3 D, the devolatilization ability is low, so that the vent-up is likely to occur. If the width is more than 1.5 D, the vent-up could occur due to the centrifugal force of the resin rotating around the screw.

The cylinder, which is also referred to as a barrel depending on the extruder manufacturer, is a cylindrical part that accommodates the two screws. The cylinder has two cylindrical holes intersecting each other, and the cylinder diameter refers to the diameter of each of the holes measured at a location where no intersection exists. As used herein, the term "1 D" refers to the cylinder diameter.

In the high energy region, or a high output region, the distance from the most downstream position of the vent opening to the tip of the screw is preferably 5.0 to 10.0 D. If the distance is shorter than the above, the resin retained at the tip of the screw will reach the vacuum vent by pressure at the die holes and the mesh screen. Thus, the vent-up is likely to occur specifically because of the resin being pushed upward from downstream of the screw toward the vent. If the distance is longer than the above, the retention time will become longer, so that the resin temperature is likely to increase, followed by increased YI.

The polycarbonate resin composition extruded in the form of a molten strand is preferably cooled in water and cut into pellets.

The shape of the extrusion die 6 is not particularly limited, and a known die may be used. The diameter of the die holes 7 of a discharge nozzle, which depends on the extrusion pressure and the dimensions of pellets to be obtained, is usually approximately 2 to 5 mm. The temperature of the polycarbonate resin composition just extruded from the extruder is preferably 260°C to 330°C, more preferably 265°C to 325°C.

The raw material for use in the method of the present invention preferably contains 50 mass% or more of the polycarbonate resin granular material having a viscosity-average molecular weight of 11000 to 27000 and a median diameter $D_{50}$ of 400 to 1500 $\mu$m, and may also contain other additional resins and additives. Such additional components can be transported from the feeding port at the base of the twin screw extruder along with or separately from the polycarbonate resin granular material, or alternatively can be added in mid-course from a separately provided kneading zone.

Examples of the additional components include other resins, flame retardants such as phosphorus-based flame retardants and organometallic salt-based flame retardants, flame retardant aids such as fluororesin (PTFE), various elastomers (impact resistance modifiers), mold release agents, stabilizers, fillers, reinforcing agents, coloring materials (dyes and pigments), ultraviolet absorbers, antistatic agents, antifogging agents, antiblocking agents, flow improvers, plasticizers, dispersants, and antimicrobial agents.

Polycarbonate resin pellets may also be used. In general, each pellet is 2 to 5 mm long and 2 to 5 mm thickness (in diameter) with a weight in a range of from 10 to 40 mg/pellet.

Such polycarbonate resin pellets may be unused (i.e., virgin) pellets or recycled pellets. The recycled pellets are preferably produced from, for example, optical disks such as CDs and DVDs, light guide plates, automotive window glass and automotive headlamp lenses, transparent vehicle members such as windshields, containers such as water bottles, ophthalmic lenses, or architectural members such as soundproof walls, glass windows, and corrugated sheets, etc. Further examples include non-conforming products during molding process, pulverized products left in sprues and runners, and repellets made from the above-described products after pulverization, washing, separation, and recovery.

The polycarbonate resin composition pellets obtained by the method of the present invention have excellent transparency with a total luminous transmittance of preferably 50% or more, more preferably 60% or more, still more preferably 65% or more, and particularly 70% or more, as measured in accordance with JIS K7361 by allowing light to pass through the pellets (2 mm thick).

The polycarbonate resin composition pellets obtained by the method of the present invention may be formed into molded products by any method. Examples of the molding method include those usually applied to polycarbonate resins, such as common injection molding, ultra-high-speed injection molding, injection compression molding, multicolor injection molding, gas-assisted injection molding, molding using an insulated mold, rapid heating and cooling molding, foam molding (including supercritical fluid foaming), insert molding, IMC (in-mold coating) molding, extrusion molding, sheet molding, thermoforming, rotational molding, laminate molding, and press molding.

The resultant molded products are suitable for use as components for OA equipment such as printers and copiers, electric equipment, electronic equipment, vehicles such as automobiles, houses, building construction, and the like. In particular, they can be suitably used as housings, etc. for OA equipment such as printers and copiers, computers, PCs, various mobile terminals, batteries and the like.

[Examples]

Hereinafter, the present invention will be described more specifically by way of Examples. However, the present invention is not limited to the Examples below.

An extruder used in the Examples and Comparative Examples was an ultra-high torque twin screw extruder, "TEX44$\alpha$III" manufactured by The Japan Steel Works, Ltd. The extruder had a center-to-center distance between screw shafts of 3.87 cm and a maximum torque (the sum of torques applied to the bases of the two screw shafts) of 2077 Nm.

The screw configuration of the extruder was any of cylinder configurations 1 to 3 shown in Fig. 2. In each of the cylinder configurations, a kneading zone had an RRNNL configuration with five kneading discs. Each of the kneading discs had five blades that were each 0.936 D long. Note that 1 D was a cylinder diameter of 47 mm.

Fig. 2 shows the cylinder configurations 1 to 3.

Cylinder configuration 1

A hopper cylinder was located at a cylinder position C1; intermediate cylinders (without openings) were located at C2 to C11; a vent cylinder with a long opening (4 D long and 1 D wide) was located at C12; and intermediate cylinders were located at C13 and C14.

Cylinder configuration 2

A hopper cylinder was located at C1; intermediate cylinders were located at C2 to C12; a vent cylinder with a long opening (4 D long and 1 D wide) was located at C13; and an intermediate cylinder was located at C14.

Cylinder configuration 3

A hopper cylinder was located at C1; intermediate cylinders were located at C2 to C12; a vent cylinder with a normal opening (1 D long and 1 D wide) was located at C13; and intermediate cylinders were located at C14 and C15.

The breaker plate 5 was equipped with a screen mesh (40 mesh). The die 6 had 17 holes, each of which had a hole diameter $\varphi$ of 4.8 mm and a land length L of 16 mm.

Examples 1 to 7 and Comparative Examples 1 and 2

The raw material used was a polycarbonate resin granular material ("H-7000" manufactured by Mitsubishi Engineering-Plastics Corporation; hereinafter, referred to as "PC-1") having a viscosity-average molecular weight Mv of 14200 and a median diameter $D_{50}$ of 574 $\mu$m as measured by light-scattering wet method. The median diameter $D_{50}$ measured by the dry sieving method specified by JIS K0069 was 620 $\mu$m.

Example 1

The extruder had the cylinder configuration 1. The cylinder was set at the following temperatures: 70°C at the cylinder position C2; 250°C at C3 to C14; and 250°C at the flange and the die holder. The screw rotation speed was 700 rpm. The PC-1 was fed to the hopper cylinder at C1 to provide a throughput (i.e., an output) of 850 kg/h, and was kneaded under the condition that the value of output/rotation speed/cube of distance between shafts was 0.021 kg/h/rpm/cm$^3$. The screw shaft torque density was obtained from the motor torque (displayed in percent on the control panel) during kneading. The die holder 4 was opened using the hinge attached to the flange 3, and a vacuum was drawn. Then, a turbid unmelted part was observed in the transparent molten polycarbonate resin in the flange 3 before the die holder 4. The polycarbonate resin including the molten and unmelted parts falls free into a water-filled tray placed underneath. Every time the tray was filled with approximately 10 kg of polycarbonate resin, the polycarbonate resin was removed. The polycarbonate resin around the tips of the two screws visible through the opened die holder was photographed, followed by enlargement and the above-described image analysis of the photograph, thereby obtaining the area fraction of the unmelted part in the field of view (hereinafter, referred to as the unmelted rate). The results are shown in Table 1.

The feeding and screw rotation were temporarily stopped, and the die holder was closed. Then, the extruder was operated under the same conditions to extrude a strand, which was received in a cool water bath and cut into pellets by a pelletizer.

The resultant pellets were subjected to injection molding, followed by measurements of total luminous transmittance and YI. The temperature of the strand extruded from the die was measured with a thermocouple, which was defined as resin temperature.

The resin composition pellets were dried at 100°C for five hours, followed by injection molding using an injection molder ("J55-60H" manufactured by The Japan Steel Works, Ltd.) under the following conditions: a cylinder setting temperature of 280°C; a mold temperature of 70°C; a screw rotation speed of 100 rpm; and an injection speed of 25 mm/s. The resultant injection-molded product was a three-stepped plate (90 mm long and 50 mm wide, with three thicknesses of 3 mm (for a length of 20 mm), 2 mm (for a length of 45 mm) and 1 mm (for a length of 25 mm) from the gate side). The total luminous transmittance (unit: %) of the 2 mm thick part of the three-stepped plate was measured in accordance with JIS K7361 using a haze meter, "NDH 2000" manufactured by Nippon Denshoku Industries Co., Ltd.

Further, the YI of the same part of the three-stepped plate was measured using transmitted light by a spectrophotometer, "SE 6000" manufactured by Nippon Denshoku Industries Co., Ltd.

Based on the measurements above, the resin composition pellets were comprehensively evaluated on a three-point scale (○, △, ×) as follows:

○: YI was less than 2.0 at a thickness of 2 mm, and no production problems arose;
△: YI was less than 2.0 at a thickness of 2 mm, but difficulty arose in continuous production;
×: YI was 2.0 or more at a thickness of 2 mm, or alternatively production was impossible.

The evaluation results are shown in Table 1.

Examples 2 to 5

The same experiments as in Example 1 were conducted except for the screw rotation speed, the output, and the value of output/rotation speed/cube of distance between shafts as shown in Table 1.

Example 6

The same experiments as in Example 1 were conducted except that the extruder had the cylinder configuration 2. Vent-up was observed at the opening of the vacuum vent with a slight amount of resin gradually pushed upward from a downstream region of the screw. Then, the resin was immediately extruded into a strand and cut with a pelletizer into sample pellets in a short time. After a prolonged operation, the opening of the vacuum vent was blocked; thus, the extruder had to be stopped. Judging from the fact that the vent-up gradually occurred from the downstream region of the screw, the cause of the vent-up was presumably the resin retained at the tips of the screws by pressure at the die holes and the mesh.

Example 7

The same experiments as in Example 1 were conducted except that the extruder had the cylinder configuration 3. Vent-up was observed at the opening of the vacuum vent with a slight amount of resin gradually pushed upward from an upstream region of the screw. Then, the resin was immediately extruded into a strand and cut with a pelletizer into sample pellets in a short time. After a prolonged operation, the opening of the vacuum vent was blocked; thus, the extruder had to be stopped. Judging from the fact that the vent-up gradually occurred from the upstream region of the screw, the cause of the gradual vent-up was presumably the volatile components from the resin that were so large in volume for the normal vent with a small opening that they moved upward at a fast rate.

Comparative Example 1

The same experiments as in Example 1 were conducted except for the screw rotation speed, the output, and the value of output/rotation speed/cube of distance between shafts as shown in Table 1. The unmelted ratio obtained when the die holder was opened was as high as 33%. After the die holder was closed, the resin was extruded into a strand. Then, vent-up occurred rapidly from upstream of the screw; thus, the extruder had to be stopped. There was no time even for sampling of pellets. The cause of the rapid vent-up was presumably the large amount of unmelted part, which blocked the mesh and caused the resin to be retained over a long range at the tips of the screws.

Comparative Example 2

The same experiments as in Example 1 were conducted except for the screw rotation speed, the output, and the value of output/rotation speed/cube of distance between shafts as shown in Table 1. No unmelted part was observed (unmelted ratio: 0%) when the die holder was opened. After the die holder was closed, the resin was extruded into a strand and cut into pellets. The temperature of the strand was high, and the YI of the injection molded piece was high as well. The absence of unmelted part was presumably the cause of the easily increased resin temperature, followed by poor color tone.

The results of the above-described experiments are shown in Table 1.

[Table 1]

| | Example | | | | | | | Comp. Example | |
|---|---|---|---|---|---|---|---|---|---|
| | 1 | 2 | 3 | 4 | 5 | 6 | 7 | 1 | 2 |
| Cylinder configuration | 1 | 1 | 1 | 1 | 1 | 2 | 3 | 1 | 1 |
| Output (kg/h) | 850 | 700 | 850 | 700 | 800 | 850 | 850 | 700 | 600 |
| Screw rotation speed (rpm) | 700 | 600 | 600 | 550 | 750 | 700 | 700 | 450 | 750 |
| Output/screw rotation speed/ cube of distance between shafts (kg/h/rpm/cm$^3$) | 0.021 | 0.020 | 0.024 | 0.022 | 0.018 | 0.021 | 0.021 | 0.027 | 0.014 |
| Unmelted rate (%) | 6 | 7 | 15 | 14 | 5 | 7 | 7 | 33 | 0 |
| Torque (%) | 69 | 68 | 81 | 74 | 65 | 69 | 69 | 85 | 51 |
| Torque density (Nm/cm$^3$) | 12.4 | 12.2 | 14.5 | 13.2 | 11.6 | 12.4 | 12.4 | 15.2 | 9.1 |
| Resin temperature (°C) | 275 | 271 | 266 | 267 | 275 | 273 | 274 | 261 | 295 |
| Vent-up | No vent-up | No vent-up | No vent-up | No vent-up | No vent-up | Gradual vent-up from downstream | Gradual vent-up from upstream | Rapid vent-up from upstream; production impossible | No vent-up |
| Total luminous transmittance (%) | 84 | 84 | 84 | 84 | 83 | 84 | 83 | - | 79 |
| YI | 0.7 | 0.6 | 0.6 | 0.6 | 0.8 | 0.8 | 0.9 | - | 3.1 |
| Comprehensive evaluation | ○ | ○ | ○ | ○ | ○ | Δ | Δ | × | × |

Examples 8 to 14 and Comparative Examples 3 and 4

The raw material used was a polycarbonate resin granular material ("S-3000" manufactured by Mitsubishi Engineering-Plastics Corporation; hereinafter, referred to as "PC-2") having a viscosity-average molecular weight Mv of 21500 and a median diameter $D_{50}$ of 1060 $\mu$m as measured by light-scattering wet method. The median diameter $D_{50}$ measured by the dry sieving method specified by JIS K0069 was 1150 $\mu$m.

Example 8

The same experiments as in Example 1 were conducted except that the polycarbonate PC-2 was used in place of the PC-1.

Examples 9 to 12

The same experiments as in Example 8 were conducted except for the screw rotation speed, the output, and the value of output/rotation speed/cube of distance between shafts as shown in Table 2.

Example 13

The same experiments as in Example 8 were conducted except that the extruder had the cylinder configuration 2. Vent-up was observed at the opening of the vacuum vent with a slight amount of resin gradually pushed upward from a downstream region of the screw. Then, the resin was immediately extruded into a strand and cut with a pelletizer into sample pellets in a short time. After a prolonged operation, the opening of the vacuum vent was blocked; thus, the extruder had to be stopped. Judging from the fact that the vent-up gradually occurred from the downstream region of the screw, the cause of the vent-up was presumably the resin retained at the tips of the screws by pressure at the die holes and the mesh.

Example 14

The same experiments as in Example 8 were conducted except that the extruder had the cylinder configuration 3. Vent-up was observed at the opening of the vacuum vent with a slight amount of resin gradually pushed upward from an upstream region of the screw. Then, the resin was immediately extruded into a strand and cut with a pelletizer into sample pellets in a short time. After a prolonged operation, the opening of the vacuum vent was blocked; thus, the extruder had to be stopped. Judging from the fact that the vent-up gradually occurred from the upstream region of the screw, the cause of the gradual vent-up was presumably the volatile components from the resin that were so large in volume for the normal vent with a small opening that they moved upward at a fast rate.

Comparative Example 3

The same experiments as in Example 8 were conducted except for the screw rotation speed, the output, and the value of output/rotation speed/cube of distance between shafts as shown in Table 2. The unmelted ratio obtained when the die holder was opened was as high as 32%. After the die holder was closed, the resin was extruded into a strand. Then, vent-up occurred rapidly from upstream of the screw; thus, the extruder had to be stopped. There was no time even for sampling of pellets. The cause of the rapid vent-up was presumably the large amount of unmelted part, which blocked the mesh and caused the resin to be retained over a long range at the tips of the screws.

Comparative Example 4

The same experiments as in Example 8 were conducted except for the screw rotation speed, the output, and the value of output/rotation speed/cube of distance between shafts as shown in Table 2. No unmelted part was observed (unmelted ratio: 0%) when the die holder was opened. After the die holder was closed, the resin was extruded into a strand and cut into pellets. The temperature of the strand was high, and the YI of the injection molded piece was high as well. The absence of unmelted part was presumably the cause of the easily increased resin temperature, followed by poor color tone.

The results of the above-described experiments are shown in Table 2.

[Table 2]

| | Example | | | | | | | Comp. Example | |
|---|---|---|---|---|---|---|---|---|---|
| | 8 | 9 | 10 | 11 | 12 | 13 | 14 | 3 | 4 |
| Cylinder configuration | 1 | 1 | 1 | 1 | 1 | 2 | 3 | 1 | 1 |
| Output (kg/h) | 850 | 700 | 850 | 700 | 800 | 850 | 850 | 700 | 600 |
| Screw rotation speed (rpm) | 700 | 600 | 600 | 550 | 750 | 700 | 700 | 450 | 750 |
| Output/screw rotation speed/ cube of distance between shafts (kg/h/rpm/cm$^3$) | 0.021 | 0.020 | 0.024 | 0.022 | 0.018 | 0.021 | 0.021 | 0.027 | 0.014 |
| Unmelted rate (%) | 4 | 6 | 13 | 11 | 4 | 6 | 5 | 32 | 0 |
| Torque (%) | 74 | 73 | 83 | 79 | 70 | 74 | 74 | 84 | 56 |
| Torque density (Nm/cm$^3$) | 13.2 | 13.1 | 14.9 | 14.1 | 12.5 | 13.2 | 13.2 | 15.0 | 10.0 |
| Resin temperature (°C) | 315 | 311 | 306 | 307 | 321 | 313 | 314 | 303 | 335 |
| Vent-up | No vent-up | No vent-up | No vent-up | No vent-up | No vent-up | Gradual vent-up from downstream | Gradual vent-up from upstream | Rapid vent-up from up-stream; production im-possible | No vent-up |
| Total luminous transmittance (%) | 82 | 82 | 84 | 82 | 81 | 80 | 80 | - | 76 |
| YI | 1.3 | 1.2 | 1.1 | 1.1 | 1.6 | 1.5 | 1.8 | - | 4.2 |
| Comprehensive evaluation | ○ | ○ | ○ | ○ | ○ | Δ | Δ | × | × |

Examples 15 to 21 and Comparative Examples 5 to 7

The raw material used was a mixture of 80 mass% of the PC-2 and 20 mass% of a polycarbonate resin ("M7020IR" manufactured by Mitsubishi Engineering-Plastics Corporation) having a viscosity-average molecular weight of 20800 in the form of pellets (each having a diameter of 3 mm, a length of 3 mm, and an average weight of 20 mg; hereinafter, referred to as "PC-3").

Example 15

The same experiments as in Example 1 were conducted except that 80 mass% (680 kg/h) of the polycarbonate resin PC-2 and 20 mass% (170 kg/h) of the PC-3 were used in place of the PC-1.

Examples 16 to 19

The same experiments as in Example 15 were conducted except for the screw rotation speed, the output, and the value of output/rotation speed/cube of distance between shafts as shown in Table 3.

Example 20

The same experiments as in Example 15 were conducted except that the extruder had the cylinder configuration 2. Vent-up was observed at the opening of the vacuum vent with a slight amount of resin gradually pushed upward from a downstream region of the screw. Then, the resin was immediately extruded into a strand and cut with a pelletizer into sample pellets in a short time. After a prolonged operation, the opening of the vacuum vent was blocked; thus, the extruder had to be stopped. Judging from the fact that the vent-up gradually occurred from the downstream region of the screw, the cause of the vent-up was presumably the resin retained at the tips of the screws by pressure at the die holes and the mesh.

Example 21

The same experiments as in Example 15 were conducted except that the extruder had the cylinder configuration 3. Vent-up was observed at the opening of the vacuum vent with a slight amount of resin gradually pushed upward from an upstream region of the screw. Then, the resin was immediately extruded into a strand and cut with a pelletizer into sample pellets in a short time. After a prolonged operation, the opening of the vacuum vent was blocked; thus, the extruder had to be stopped. Judging from the fact that the vent-up gradually occurred from the upstream region of the screw, the cause of the gradual vent-up was presumably the volatile components from the resin that were so large in volume for the normal vent with a small opening that they moved upward at a fast rate.

Comparative Example 5

The same experiments as in Example 15 were conducted except for the screw rotation speed, the output, and the value of output/rotation speed/cube of distance between shafts as shown in Table 3. The unmelted ratio obtained when the die holder was opened was as high as 36%. After the die holder was closed, the resin was extruded into a strand. Then, vent-up occurred rapidly from upstream of the screw; thus, the extruder had to be stopped. There was no time even for sampling of pellets. The cause of the rapid vent-up was presumably the large amount of unmelted part, which blocked the mesh and caused the resin to be retained over a long range at the tips of the screws.

Comparative Example 6

The same experiments as in Example 15 were conducted except for the screw rotation speed, the output, and the value of output/rotation speed/cube of distance between shafts as shown in Table 3. No unmelted part was observed (unmelted ratio: 0%) when the die holder was opened. After the die holder was closed, the resin was extruded into a strand and cut into pellets. The temperature of the strand was high, and the YI of the injection molded piece was high as well. The absence of unmelted part was presumably the cause of the easily increased resin temperature, followed by poor color tone.

Comparative Example 7

The same experiments as in Example 19 were conducted except that 100 mass% of the PC-3 was used as a raw material. The unmelted ratio obtained when the die holder was opened was as high as 35%. After the die holder was closed, the resin was extruded into a strand. Then, vent-up occurred rapidly from upstream of the screw; thus, the extruder had to be stopped. There was no time even for sampling of pellets. The cause of the rapid vent-up was presumably the large amount of unmelted part, which blocked the mesh and caused the resin to be retained over a long range at the tips of the screws. It can be seen that when pellets are used as raw materials, they are difficult to melt.

The results of the above-described experiments are shown in Table 3.

[Table 3]

| | Example | | | | | | | Comp. Example | | |
|---|---|---|---|---|---|---|---|---|---|---|
| | 15 | 16 | 17 | 18 | 19 | 20 | 21 | 5 | 6 | 7 |
| Cylinder configuration | 1 | 1 | 1 | 1 | 1 | 2 | 3 | 1 | 1 | 1 |
| Output (kg/h) | 850 | 700 | 850 | 700 | 800 | 850 | 850 | 700 | 600 | 800 |
| Screw rotation speed (rpm) | 700 | 600 | 600 | 550 | 750 | 700 | 700 | 450 | 750 | 750 |
| Output/screw rotation speed/ cube of distance between shafts (kg/h/rpm/cm$^3$) | 0.021 | 0.020 | 0.024 | 0.022 | 0.018 | 0.021 | 0.021 | 0.027 | 0.014 | 0.018 |
| Unmelted rate (%) | 8 | 11 | 18 | 19 | 6 | 11 | 9 | 36 | 0 | 35 |
| Torque (%) | 72 | 71 | 82 | 78 | 68 | 72 | 71 | 81 | 54 | 67 |
| Torque density (Nm/cm$^3$) | 12.9 | 12.7 | 14.7 | 14.0 | 12.2 | 12.9 | 12.7 | 14.5 | 9.7 | 12.0 |
| Resin temperature (°C) | 312 | 309 | 304 | 305 | 319 | 312 | 312 | 300 | 332 | 307 |
| Vent-up | No vent-up | No vent-up | No vent-up | No vent-up | No vent-up | Gradual vent-up from downstream | Gradual vent-up from upstream | Rapid vent-up from upstream; production impossible | No vent-up | Rapid vent-up from upstream; production impossible |
| Total luminous transmittance (%) | 81 | 80 | 81 | 81 | 79 | 79 | 79 | - | 74 | - |
| YI | 1.6 | 1.7 | 1.5 | 1.5 | 1.9 | 1.8 | 1.8 | - | 4.8 | - |
| Comprehensive evaluation | ○ | ○ | ○ | ○ | ○ | △ | △ | × | × | × |

17

[Industrial Applicability]

The method of the present invention makes it possible to produce polycarbonate resin composition pellets with excellent transparency more stably while achieving high productivity, using an ultra-high torque twin screw extruder. Thus, the production method is highly industrially applicable.

[Reference Signs List]

| 1, 1' | Screw |
|---|---|
| 2 | Tip of cylinder of extruder |
| 3 | Flange |
| 4 | Die holder |
| 5 | Breaker plate |
| 6 | Die |
| 7 | Die hole |
| A | Site of measurement of unmelted ratio in resin inside flange 3 |

## Claims

1. A method for producing polycarbonate resin composition pellets from a polycarbonate resin granular material with a twin screw extruder, wherein the polycarbonate resin granular material has a viscosity-average molecular weight of 11000 to 27000 and a median diameter $D_{50}$ of 400 to 1500 $\mu$m as measured by a light-scattering wet method, and the method comprises:

   kneading the polycarbonate resin granular material under the following conditions: a screw shaft torque density at a base of each screw is in a range of from 9.0 to 17.0 Nm/cm$^3$; a screw rotation speed is in a range of from 400 to 800 rpm; and a value of [output (kg/h) $\div$ screw rotation speed (rpm) $\div$ cube of center-to-center distance between two screw shafts (cm$^3$)] is 0.015 to 0.026 kg/h/rpm/cm$^3$, so that an unmelted rate in a flange before a die holder is in a range of 2 to 30%; and
   extruding a strand from a die, and pelletizing the strand.

2. The method of claim 1, wherein devolatilization is carried out under vacuum using a vent with an opening provided downstream of a kneading zone, the opening having a length of 2.0 to 6.0 D (D is a cylinder diameter) in a screw shaft direction and being provided such that a distance from a most downstream position of the vent opening to a tip of screw is 5.0 to 10.0 D.

3. The method of claim 1 or 2, wherein the strand just extruded from the die has a temperature in a range of from 260°C to 330°C.

4. The method of any one of claims 1 to 3, wherein the resultant polycarbonate resin composition pellets have a total light transmittance of 50% or more as measured using transmitted light in accordance with JIS K7361.

[FIG.1]

[Fig.2]

Raw material transporting direction ⟶

Cylinder configuration 1

Cylinder configuration 2

Cylinder configuration 3

[Fig.3]

[Fig.4]

[Fig.5]

[Fig.6]

## INTERNATIONAL SEARCH REPORT

| International application No. |
|---|
| **PCT/JP2024/021180** |

**A.    CLASSIFICATION OF SUBJECT MATTER**

*B29B 9/06*(2006.01)i; *B29B 7/46*(2006.01)i; *B29B 7/84*(2006.01)i; *B29K 69/00*(2006.01)n
FI:    B29B9/06; B29B7/46; B29B7/84; B29K69:00

According to International Patent Classification (IPC) or to both national classification and IPC

**B.    FIELDS SEARCHED**

Minimum documentation searched (classification system followed by classification symbols)

B29B7/00-11/14; B29B13/00-15/06; B29C31/00-31/10; B29C37/00-37/04; B29C71/00-71/02; B29K69/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2023/089929 A1 (MITSUBISHI ENGINEERING PLASTICS CORP.) 25 May 2023 (2023-05-25)<br>    paragraphs [0077]-[0104], fig. 1 | 1-4 |
| A | JP 2003-73484 A (ASAHI KASEI KABUSHIKI KAISHA) 12 March 2003 (2003-03-12) | 1-4 |
| A | JP 09-66524 A (MITSUBISHI GAS CHEMICAL COMPANY, INC.) 11 March 1997 (1997-03-11) | 1-4 |
| A | JP 2020-40356 A (MITSUBISHI ENGINEERING PLASTICS CORP.) 19 March 2020 (2020-03-19) | 1-4 |

☐ Further documents are listed in the continuation of Box C.          ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **07 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/021180**

| Patent document cited in search report | | | Publication date (day/month/year) | Patent family member(s) | | | Publication date (day/month/year) |
|---|---|---|---|---|---|---|---|
| WO | 2023/089929 | A1 | 25 May 2023 | (Family: none) | | | |
| JP | 2003-73484 | A | 12 March 2003 | (Family: none) | | | |
| JP | 09-66524 | A | 11 March 1997 | US | 5717055 | A | |
| JP | 2020-40356 | A | 19 March 2020 | JP | 2022-130699 | A | |

Form PCT/ISA/210 (patent family annex) (July 2022)

**EP 4 737 085 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012213997 A